# EUROPEAN PATENT APPLICATION

(11) **EP 4 553 241 A1**
(43) Date of publication of application: **14.05.2025**
(21) Application number: 23212564.1
(22) Date of filing: 28.11.2023
(51) Int. Cl.: E03C 1/04, B05B 1/18

(54) **WATER OUTLET DEVICE AND WATER OUTLET SYSTEM**

(30) Priority: 10.11.2023 CN 202311495543
(71) Applicant: Fujian Xihe Sanitary Ware Technology Co., Ltd., QuanZhou, Fujian (CN)
(72) Inventor: LIN, Xiaofa, QuanZhou, Fujian (CN); LIN, Xiaoshan, QuanZhou, Fujian (CN); WAN, Zhigang, QuanZhou, Fujian (CN); LIANG, Pansheng, QuanZhou, Fujian (CN); DENG, Xiaoqing, QuanZhou, Fujian (CN); LIU, Qiqiao, QuanZhou, Fujian (CN)
(74) Representative: Cameron Intellectual Property Ltd

(57) **Abstract**

The embodiments of the present application disclose a water outlet device and a water outlet system, which relate to, but are not limited to, water outlet technologies. The water outlet device includes a housing assembly provided with a water inlet flow channel and at least one water outlet hole, a moving mechanism and a driving member. The moving mechanism is disposed between each water outlet hole and the water inlet flow channel. The moving mechanism is provided with a first groove wall and a second groove wall which are oppositely arranged along the first direction. Therefore, the driving forces of the water entering the first groove and acting on the first groove wall and the second groove wall have opposite driving directions with respect to the moving mechanism, which can partially or completely counteract the acting forces of the fluid on the moving mechanism, reduce the influence of the water pressure on the switching resistance of the water outlet device, avoid the switching resistance increasing with the increase of the water pressure, thereby well controlling the driving force of the driving member, satisfying user's selection diversity for water outlet switching, and improving a hand feeling and use experience of the water outlet switching.

## Description

### TECHNICAL FIELD

The present application relates to, but is not limited to, water outlet technologies, in particular to a water outlet device and a water outlet system.

### BACKGROUND

When an existing water outlet device performs water outlet switching through a driving structure, a switching resistance on the driving structure will increase with the increase of a water pressure, which affects the use experience.

### SUMMARY

The present application provides a water outlet device and a water outlet system, aiming at solving the technical problem that a switching resistance of a driving structure in the existing water outlet device increases with the increase of water pressure.

To achieve the above objects, the present application provides a water outlet device including:
a housing assembly provided with a water inlet flow channel and at least one water outlet hole;
a moving mechanism movably mounted in the housing assembly and movable relative to the housing assembly along a first direction, wherein the moving mechanism is disposed between each water outlet hole and the water inlet flow channel, the moving mechanism is provided with a first groove, the first groove is communicated with the water inlet flow channel, the moving mechanism is provided with a first groove wall and a second groove wall opposite to each other along the first direction, the first groove wall and the second groove wall define the first groove, the first groove wall and the second groove wall are arranged so that water acting forces acting on the first groove wall and the second groove wall can be at least partially counteracted; and
a driving member movably connected to the housing assembly, wherein the driving member is movable relative to the housing assembly so as to drive the moving mechanism to move relative to the housing assembly along the first direction, so that a water outlet hole corresponding to the moving mechanism is communicated with or disconnected from the water inlet flow channel.

To achieve the above objects, the present application provides a water outlet system, comprising:
the water outlet device as described above; and
a water supply device configured to supply water to the water inlet flow channel.

The implementation of embodiments of the present application will have the following beneficial effects.

Once the water outlet device of the above scheme is applied to the water outlet system, in addition to bring excellent water outlet switching efficiency to the water outlet system, influence of water pressure on switching resistance can be reduced by the water outlet device, thus improving the use experience. Specifically, the water outlet device includes a housing assembly provided with a water inlet flow channel and at least one water outlet hole, a moving mechanism and a driving member. The moving mechanism is disposed between each water outlet hole and the water inlet flow channel. The moving mechanism is provided with a first groove wall and a second groove wall which are oppositely arranged along the first direction. Therefore, the driving forces applied by the water entering the first groove and acting on the first groove wall and the second groove wall have opposite driving directions with respect to the moving mechanism, which can partially or completely counteract the acting forces of the fluid on the moving mechanism, reduce the influence of the water pressure on the switching resistance of the water outlet device, avoid the switching resistance increasing with the increase of the water pressure, thereby well controlling the driving force of the driving member, satisfying user's selection diversity for water outlet switching, and improving a hand feeling and use experience of the water outlet switching.

Other features and advantages of the present application will be set forth in the description which follows, and in part will be obvious from the description, or may be learned by practice of the present application. Other advantages of the present application may be realized and attained by the solutions described in the description as well as the drawings.

### BRIEF DESCRIPTION OF THE DRAWINGS

Accompanying drawings are used to provide an understanding of technical solutions of the present application, and constitute a part of the specification. Together with the embodiments of the present application, they are used to explain the technical solutions of the present application and do not constitute a limitation on the technical solutions of the present application.
FIG. 1 is a schematic diagram of a structure of a water outlet device in an embodiment of the present application;
FIG. 2 is a schematic exploded diagram of a structure of the water outlet device shown in FIG. 1;
FIG. 3 is an enlarged schematic diagram of a structure of Part A in FIG. 2;
FIG. 4 is an enlarged schematic diagram of a structure of Part B in FIG. 2;
FIG. 5 is a schematic diagram of a structure of a first outer housing in the water outlet device shown in FIG. 1;
FIG. 6 is a schematic diagram of a structure of a second outer housing in the water outlet device shown in FIG. 1;
FIG. 7 is a schematic diagram of a structure of a driving member in the water outlet device shown in FIG. 1;
FIG. 8 is a cross-sectional diagram showing a position of a first moving mechanism in the water outlet device shown in FIG. 1, in which a water outlet hole corresponding to the first moving mechanism is disconnected from a water inlet flow channel;
FIG. 9 is a cross-sectional diagram showing the position of the first moving mechanism in the water outlet device shown in FIG. 1, in which the water outlet hole corresponding to the first moving mechanism is communicated with the water inlet flow channel;
FIG. 10 is a cross-sectional diagram showing the position of the first moving mechanism in the water outlet device shown in FIG. 1 from another perspective, in which the water outlet hole corresponding to the first moving mechanism is communicated with the water inlet flow channel;
FIG. 11 is an enlarged schematic diagram of a structure of Part C in FIG. 10; and
FIG. 12 is a cross-sectional view of the water outlet device shown in FIG. 1, in which water outlet holes corresponding to the first moving mechanism and the second moving mechanism are communicated with the water inlet flow channel.

### Description of Reference Signs:

10-housing assembly; 11-circumferential wall; 111-opening; 12-annular wall; 13-connecting column; 14-first outer housing; 15-second outer housing; 20-moving mechanism; 20a-first moving mechanism; 20b-second moving mechanism; 20c-third moving mechanism; 20d-fourth moving mechanism; 21-first groove wall; 22-second groove wall; 23-third groove wall; 24-fourth groove wall; 241-guiding part; 25-body; 251-first end; 252-second end; 26-first sealing assembly; 261-first sealing member; 262-first clamping member; 27-second sealing assembly; 271-second sealing member; 272-second clamping member; 28-third sealing assembly; 281-third sealing member; 282-third clamping member; 30-driving member; 31-protruding part; 311-guiding surface; 32-slider; 33-driving protrusion; 40-reset member; 50-positioning assembly; 51-mounting component; 52-abutting component; 53-elastic component; 100-water inlet flow channel; 200-water outlet hole; 200a-first water outlet hole; 200b-second water outlet hole; 200c-third water outlet hole; 200d-fourth water outlet hole; 300-first groove; 400-water outlet chamber; 400a-first water outlet chamber; 400b-second water outlet chamber; 400c-third water outlet chamber; 400d-fourth water outlet chamber; 500-second groove; 600-through hole; 700-chute; 800-accommodating groove; 900-positioning part; 1000-mounting space.

The realization of the object, functional features and advantages of the present application are further explained with reference to the accompanying drawings in connection with the embodiments.

### DETAILED DESCRIPTION

The present application describes multiple embodiments, but the description is exemplary rather than restrictive, and it will be obvious to those of ordinary skills in the art that more embodiments and implementations may be included within the scope of the embodiments described by the present application. Although many possible combinations of features are shown in the drawings and discussed in the detailed description, many other combinations of the disclosed features are also possible. Unless specifically limited, any feature or element of any embodiment may be used in combination with, or substituted for, any other feature or element of any other embodiment.

The present application includes and contemplates combinations with features and elements known to those of ordinary skills in the art. The disclosed embodiments, features, and elements of the present application may also be combined with any conventional features or elements to form a unique inventive solution as defined by the claims. Any feature or element of any embodiment may also be combined with feature(s) or element(s) from other inventive solution to form another unique inventive solution as defined by the claims. Accordingly, it should be understood that any of the features shown and/or discussed in the present application may be implemented alone or in any suitable combination. Thus, the embodiments are not subjected to limitations other than those made in accordance with the appended claims and their equivalent substitutions. In addition, various modifications and changes may be made within the protection scope of the appended claims.

Furthermore, when describing representative embodiments, the specification may have presented a method and/or process as a particular sequence of steps. However, to the extent that the method or process does not depend on the specific order of steps described by the present application, the method or process should not be limited to the specific order of steps described. As will be understood by those of ordinary skills in the art, other order of steps is also possible. Accordingly, the particular order of steps set forth in the specification should not be construed as limitations on the claims. Furthermore, the claims for the method and/or process should not be limited to the steps which are performed in the written order. Those skilled in the art can readily understand that these orders can be changed and still remain within the scope of the embodiments of the present application.

Embodiments of the present application provide a water outlet device and a water outlet system. The water outlet system can be mounted in various occasions and environments such as companies, schools, homes, factories and the like to achieve cleaning effect, so as to promote and improve people's life quality and health.

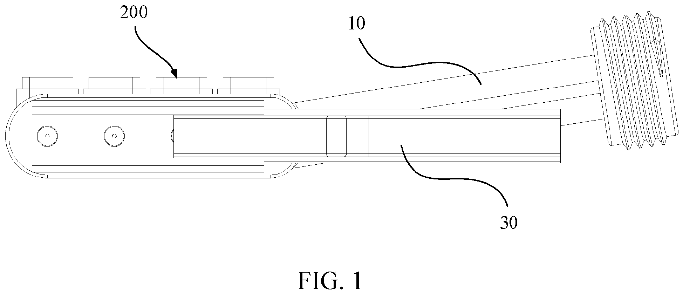

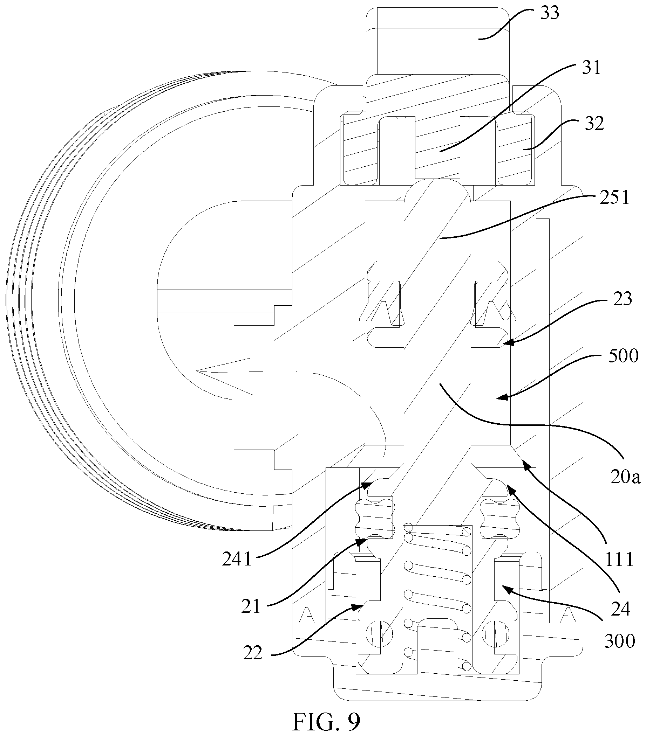

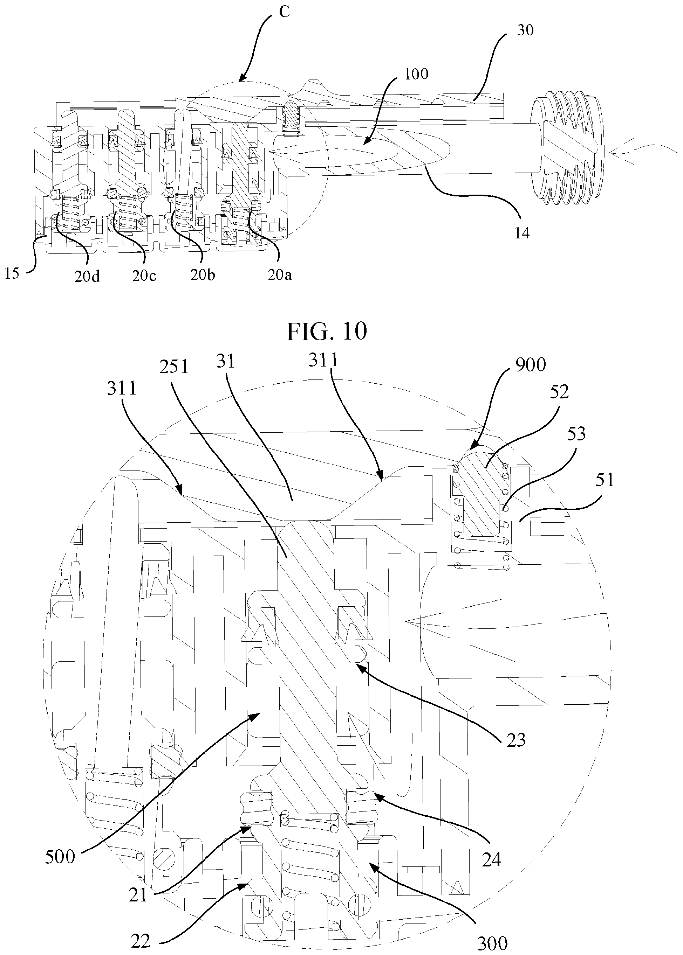

References are made to FIGS. 1, 2, 4 and 8-10 to explain the water outlet system provided by embodiments of the present application. The water outlet system includes a water outlet device and a water supply device. The water outlet device includes a housing assembly 10, a moving mechanism 20 and a driving member 30. The housing assembly 10 is provided with a water inlet flow channel 100 and at least one water outlet hole 200. In an embodiment of the present application, four water outlet holes 200 are provided, that is, a first water outlet hole 200a, a second water outlet hole 200b, a third water outlet hole 200c and a fourth water outlet hole 200d.

In an exemplary embodiment, the water outlet system further includes four water outlet members, that is, a faucet, a shower head, a top sprayer and a spray gun. The faucet, the shower head, the top sprayer and the spray gun are communicated with the first water outlet hole 200a, the second water outlet hole 200b, the third water outlet hole 200c and the fourth water outlet hole 200d, respectively.

In one exemplary embodiment, the water outlet system may also be a water outlet member such as a faucet, shower head, top sprayer or spray gun. The water outlet member further includes a water outlet surface shell. The water outlet surface shell has at least one water outlet area. The water outlet device is connected with the water outlet surface shell, and each water outlet hole 200 is communicated with one water outlet area in one-to-one correspondence, so as to achieve water outlet through different water outlet areas respectively or simultaneously.

It may be understood that, in other embodiments, the number of water outlet holes 200 may also be other values to achieve different water outlet switching modes and combinations of water outlet switching modes.

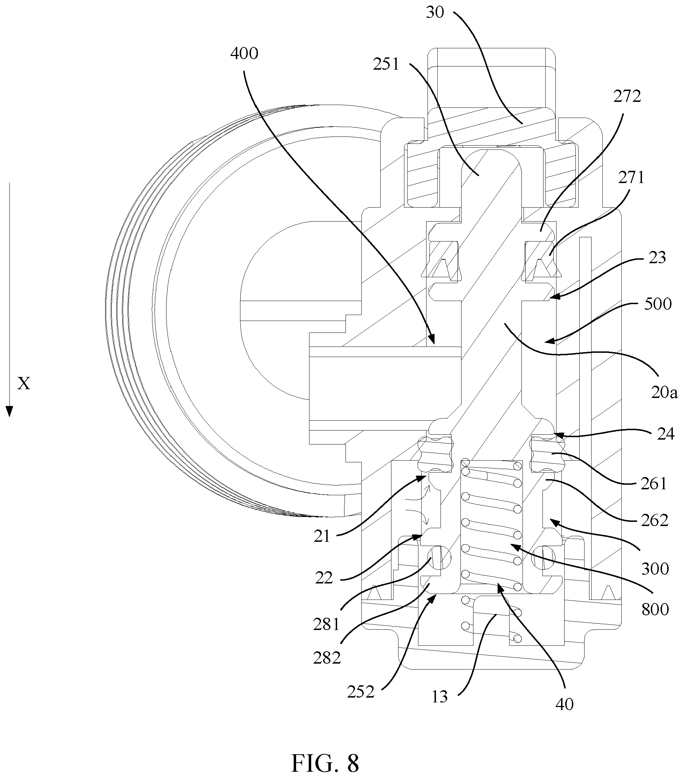

The moving mechanism 20 is movably mounted in the housing assembly 10 and is movable relative to the housing assembly 10 along a first direction. The moving mechanism 20 is disposed between each water outlet hole 200 and the water inlet flow channel 100. In an embodiment of the present application, four moving mechanisms 20 are provided, that is, a first moving mechanism 20a, a second moving mechanism 20b, a third moving mechanism 20c, and a fourth moving mechanism 20d. The first moving mechanism 20a is disposed between the first water outlet hole 200a and the water inlet flow channel 100. The second moving mechanism 20b is disposed between the second water outlet hole 200b and the water inlet flow channel 100, the third moving mechanism 20c is disposed between the third water outlet hole 200c and the water inlet flow channel 100, and the fourth moving mechanism 20d is disposed between the fourth water outlet hole 200d and the water inlet flow channel 100. In an embodiment of the present application, the first direction is parallel to a direction indicated by arrow X in FIG. 8.

The moving mechanism 20 is provided with a first groove 300. The first groove 300 communicates with the water inlet flow channel 100. The moving mechanism 20 is provided with a first groove wall 21 and a second groove wall 22 which are disposed opposite to each other along the first direction. The first groove wall 21 and the second groove wall 22 define the first groove 300. The first groove wall 21 and the second groove wall 22 are arranged so that forces acting by water on each of the first groove wall 21 and the second groove wall 22 can be at least partially counteracted.

The driving member 30 is movably connected to the housing assembly 10, and is movable relative to the housing assembly 10 to drive the moving mechanism 20 to move relative to the housing assembly 10 along the first direction, so that the water outlet hole 200 corresponding to the moving mechanism 20 is communicated with or disconnected from the water inlet flow channel 100.

The water supply device is configured to be able to supply water to the water inlet flow channel 100. The water supply device may have, but is not limited to, a manually controlled or electrically controlled valve configuration, and the water inlet flow channel 100 is communicated with or disconnected from a water source by opening or closing the water supply device. The water includes, but is not limited to, clear water or pure water from a municipal water network.

In conclusion, the implementation of the embodiments of the present application has following beneficial effects: once the water outlet device of the above scheme is applied to a water outlet system, in addition to bring excellent water outlet switching efficiency to the water outlet system, influence of water pressure on switching resistance can be reduced by the water outlet device, thus improving the use experience. Specifically, the water outlet device includes the housing assembly 10 provided with the water inlet flow channel 100 and the at least one water outlet hole 200, the moving mechanism 20 and the driving member 30. The moving mechanism 20 is disposed between each water outlet hole 200 and the water inlet flow channel 100. The moving mechanism 20 is provided with the first groove wall 21 and the second groove wall 22 opposite to each other along the first direction. Therefore, driving forces applied by the water entering the first groove 300 and acting on the first groove wall 21 and the second groove wall 22 have opposite driving directions with respect to the moving mechanism 20, which can partially or completely counteract the acting forces of the fluid on the moving mechanism 20, reduce the influence of the water pressure on the switching resistance of the water outlet device, avoid increasing of the switching resistance with the increase of the water pressure, thereby the driving force of the driving member 30 can be controlled well, user's selection diversity for the water outlet switching can be satisfied, and a hand feeling and use experience of the water outlet switching can be improved.

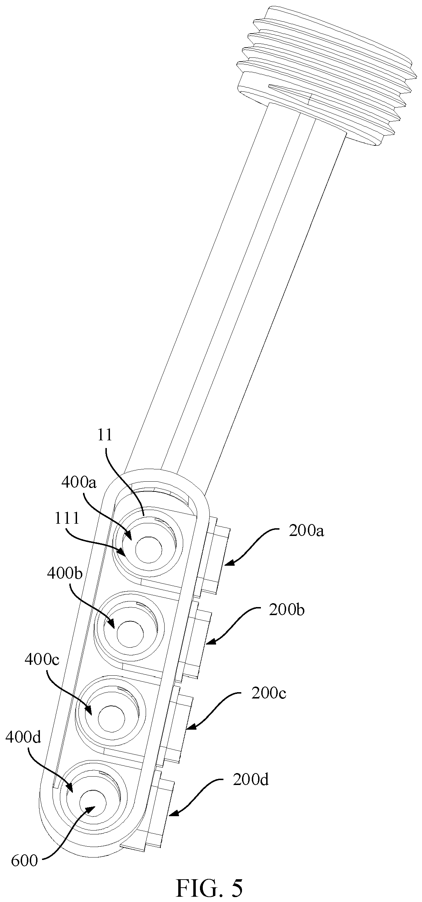

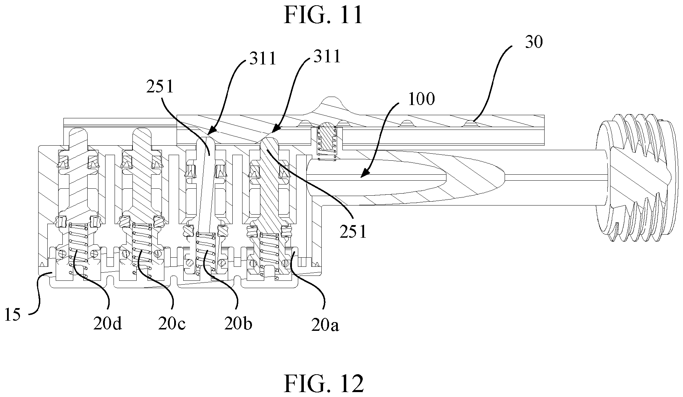

In an exemplary embodiment, referring to FIGS. 5, 8 to 12, the housing assembly 10 is further provided with at least one water outlet chamber 400, each water outlet hole 200 corresponds to one water outlet chamber 400 in one-to-one correspondence, and communicates with the water inlet flow channel 100 through the corresponding water outlet chamber 400. In an embodiment of the present application, four water outlet chambers 400 are provided, that is, a first water outlet chamber 400a communicated with a first water outlet hole 200a, a second water outlet chamber 400b communicated with a second water outlet hole 200b, a third water outlet chamber 400c communicated with a third water outlet hole 200c, and a fourth water outlet chamber 400d communicated with a fourth water outlet hole 200d. Each moving mechanism 20 can block and seal a side of a corresponding water outlet chamber 400 close to the water inlet flow channel 100, so that the water outlet hole 200 corresponding to the moving mechanism 20 is disconnected from the water inlet flow channel 100. With such arrangement of the water outlet chambers 400, the water can be rectified before being discharged from the water outlet holes 200, thereby ensuring stability of water outlet. In addition, a positional design of the water outlet holes 200 that they can communicate with the water inlet flow channel 100 through the water outlet chambers 400 facilitates the control by the moving mechanism 20, thereby improving an accuracy of water outlet switching.

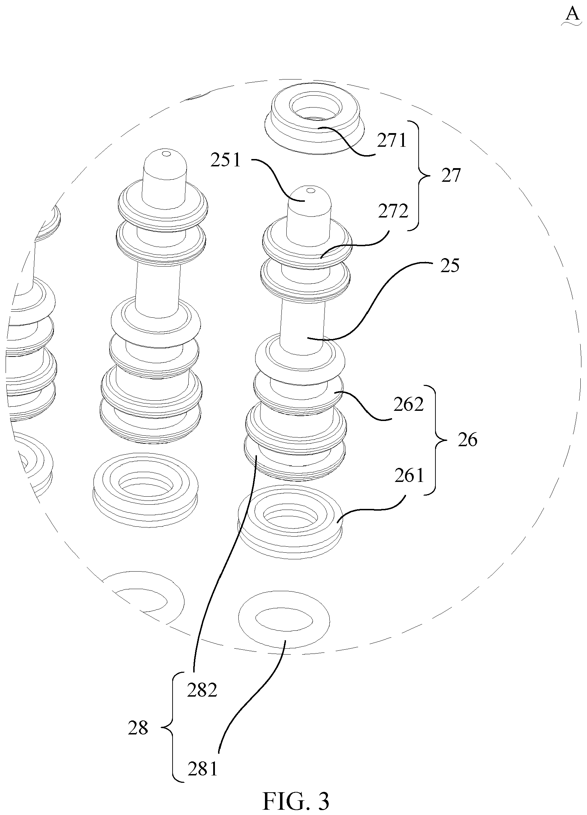

In an exemplary embodiment, referring to FIGS. 3, 8 to 12, the moving mechanism 20 is partially accommodated in the corresponding water outlet chamber 400 and is provided with a second groove 500. The second groove 500 is disposed to be accommodated in the water outlet chamber 400 and is communicated with water outlet chamber 400 in the case that a side of the corresponding water outlet chamber 400 close to the water inlet flow channel 100 is sealed and blocked. The second groove 500 on the moving mechanism 20 is provided with a third groove wall 23 and a fourth groove wall 24 disposed opposite to each other along the first direction. The third groove wall 23 and the fourth groove wall 24 define the second groove 500, and the third groove wall 23 and the fourth groove wall 24 are arranged so that the water forces applied to both of them can be at least partially counteracted. After each moving mechanism 20 opens the corresponding water outlet chamber 400, the water can fulfill the second groove 500 after entering the water outlet chamber 400. Driving forces applied by the water entering the second groove 500 and acting on the third groove wall 23 and the fourth groove wall 24 have opposite driving directions with respect to the moving mechanism 20, which can partially or completely counteract the acting forces of the fluid on the moving mechanism 20, reduce the influence of the water pressure on the switching resistance of the water outlet device, and improve the use experience. When the moving mechanism 20 is driven to block and seal the corresponding water outlet chamber 400 again, the forces applied by the water acting on the first groove wall 21 and the second groove wall 22 can be partially or completely counteracted, and the forces applied by the water acting on the third groove wall 23 and the fourth groove wall 24 can also be partially or completely counteracted, so as to facilitate the driving of the driving member and reduce the influence of the water pressure on the switching resistance of the water outlet device.

In an exemplary embodiment, referring to FIGS. 8, 9, and 11, a water-acting area of the first groove wall 21 is equal to a water-acting area of the second groove wall 22. A water-acting area of the third groove wall 23 is equal to a water-acting area of the fourth groove wall 24. Therefore, the driving forces applied by the water acting on the first groove wall 21 and the second groove wall 22 can counteract each other, and the driving forces acting on the third groove wall 23 and the fourth groove wall 24 can counteract each other, thus further reducing the influence of the water pressure on the movement of the moving mechanism 20 and minimizing a control resistance.

In an exemplary embodiment, referring to FIGS. 3 and 8-12, each corresponding water outlet chamber 400 in the housing assembly 10 is respectively provided with a circumferential wall 11 defining the corresponding water outlet chamber 400, and the circumferential wall 11 has an opening 111 communicating with the water inlet flow channel 100. Each moving mechanism 20 is guided by and matched with the corresponding circumferential wall 11 and is slidable relative to the circumferential wall 11 along the first direction, so that the circumferential wall 11 can be disposed to not only define the water outlet chamber 400, but also guide and match with the moving mechanism 20, thus improving a moving accuracy of the moving mechanism 20 relative to the housing assembly 10.

The fourth groove wall 24 can be fitted to the corresponding opening 111 to block and seal a side of the corresponding water outlet chamber 400 close to the water inlet flow channel 100. The communication and disconnection of the corresponding water outlet hole 200 with the water inlet flow channel 100 can be realized by fit and separation of the fourth groove wall 24 with the opening 111. In addition, since the fourth groove wall 24 is closer to an upstream side of the water inlet flow channel 100, the water entering the second groove 500 first generates a driving force on the fourth groove wall 24, so that the moving mechanism 20 can be driven by the water at the moment when the fourth groove wall 24 is separated from the opening 111, and the water can assist the driving member 30 in driving the moving mechanism 20, and the fourth groove wall 24 and the opening 111 can be quickly separated to a preset distance, therefore, the water can easily enter the water outlet chamber 400 and be discharged from the water outlet hole 200.

In an exemplary embodiment, referring to FIGS. 3, 8, 9, and 11, the fourth groove wall 24 has a guiding part 241. The guiding part 241 is configured to be able to guide water out of the water outlet chamber 400. In this way, the guiding part 241 is disposed so that the flow of the water has a certain directivity to guarantee that the water can flow smoothly to the water outlet chamber 400. Meanwhile, the guiding part 241 also can be conveniently driven by the water so that the water can assist in driving the moving mechanism 20 to rapidly separate the fourth groove wall 24 from the opening 111 to the preset distance. In an embodiment of the present application, the guiding part 241 has a conical structure.

In an exemplary embodiment, referring to FIGS. 8, 9 and 11, space formed by the opening 111 has a large end side facing the fourth groove wall 24, and the fourth groove wall 24 is partially accommodated in the opening 111. In this way, the opening 111 has a function of positioning the fourth groove wall 24, thereby ensuring an accuracy of the fit of the fourth groove wall 24 with the opening 111, and thus ensuring an accuracy of the sealing and blocking a side of the corresponding water outlet chamber 400 close to the water inlet flow channel 100 by the fourth groove wall 24.

In an exemplary embodiment, referring to FIGS. 3, 8, 9 and 11, the moving mechanism 20 includes a body 25 and a first sealing assembly 26. The first sealing assembly 26 is disposed on the body 25, and the fourth groove wall 24 is disposed on the first sealing assembly 26, so that blocking and sealing effect of the opening 111 can be further ensured by arrangement of the first sealing assembly 26, and the water outlet hole 200 and the water inlet flow channel 100 can be stably disconnected from each other. The first sealing assembly 26 includes a first sealing member 261 and first clamping members 262 disposed at two sides of the first sealing member 261. The two first clamping members 262 are disposed on the body 25 and clamp the first sealing member 261.

In an embodiment of the present application, a portion of the fourth groove wall 24 is located on the first sealing member 261, and the other portion of the fourth groove wall is located on one of the two first clamping members 262 closer to the second groove 500. The first sealing member 261 can be made of an elastomer material, and can be fitted to the opening 111 to produce deformation, thereby increasing a fitting area between the fourth groove wall 24 and the opening 111 and further improving the blocking and sealing effect on the opening 111. The guiding part 241 is located on the one of the two first clamping members 262 closer to the second groove 500. The first clamping members 262 can be made of a hard material and have high structural strength, thus ensuring the structural stability of the guiding part 241 and stability of the water guiding function. The first clamping members 262 may be integrally formed with the body 25. Additionally, in some exemplary embodiments, the first clamping members 262 may also be detachably connected to the body 25 to facilitate replacement of the type of the first sealing assembly 26. The first clamping members 262 can also be movable relative to the body 25 to adjust a position of the first sealing assembly 26 relative to the body 25. After the position is adjusted, positions of the first clamping members 262 can be fixed to fix the position of the first sealing assembly 26.

In an exemplary embodiment, referring to FIGS. 3, 8, 9 and 11, the moving mechanism 20 further includes a second sealing assembly 27. The second sealing assembly 27 is disposed on the body 25 and spaced from the first sealing assembly 26, a third groove wall 23 is located on the second sealing assembly 27 such that the second groove 500 is between the first sealing assembly 26 and the second sealing assembly 27.

The second sealing assembly 27 can be slidably sealed with the circumferential wall 11, thereby ensuring the sealing of the second sealing assembly 27 on the side facing away from the second groove 500 and preventing water from overflowing between the moving mechanism 20 and the circumferential wall 11. Moreover, the second sealing member 27 is slidably sealed with the circumferential wall 11, thereby ensuring stability of the movement of the moving mechanism 20 relative to the circumferential wall 11. The second sealing assembly 27 includes a second sealing member 271 and second clamping members 272 disposed at two sides of the second sealing member 271. The two second clamping members 272 are disposed on the body 25 and clamp the second sealing member 271. The second sealing member 271 can be made of an elastomer material, and can be fitted to the circumferential wall 11 to ensure slidable sealing between the second sealing member 271 and the circumferential wall 11. Furthermore, the second sealing member 271 made of the elastomer material can reduce wear when it slides relative to the circumferential wall 11, thereby reducing a risk of sealing failure caused by wear.

In an embodiment of the present application, a portion of the third groove wall 23 is located on the second sealing member 271, and the other portion of the third groove wall 23 is located on one of the two second clamping members 272 closer to the second groove 500. The second clamping members 272 may be made of a hard material. The second clamping members 272 may be integrally formed with the body 25. Additionally, in some exemplary embodiments, the second clamping members 272 may also be detachably connected to the body 25 to facilitate replacement of the type of the second sealing assembly 27. The second clamping members 272 can also be moved relative to the body 25 to adjust a position of the second sealing assembly 27 relative to the body 25. After the position is adjusted, positions of the second clamping members 272 can be fixed to fix the position of the second sealing assembly 27.

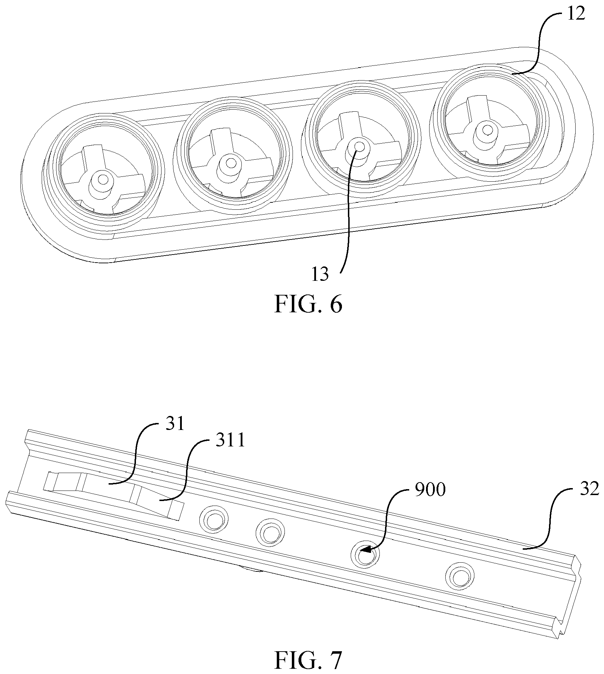

In an exemplary embodiment, referring to FIGS. 6, 8-12, the housing assembly 10 is provided with an annular wall 12 corresponding to each of the moving mechanisms 20, and each circumferential wall 11 corresponds to one of the annular walls 12 in one-to-one correspondence, and the circumferential wall 11 and the annular wall 12 are respectively located on two sides of the corresponding moving mechanism 20 along the first direction. The moving mechanism 20 further includes a third sealing assembly 28 disposed on the body 25 and the third sealing assembly 28 is located at a side of the first sealing assembly 26 away from the second sealing assembly 27 and is spaced from the first sealing assembly 26. The first groove wall 21 is disposed at a side of the first sealing assembly 26 facing away from the fourth groove wall 24, and the second groove wall 22 is disposed on the third sealing assembly 28 such that the first groove 300 is located between the first sealing assembly 26 and the third sealing assembly 28.

The third sealing assembly 28 can be slidably sealed with the annular wall 12, thereby ensuring sealing of the third sealing assembly 28 on a side facing away from the first groove 300 and preventing water from overflowing between the moving mechanism 20 and the annular wall 12. Moreover, the third sealing assembly 28 is slidably sealed with the annular wall 12, which can also ensure stability of the movement of the moving mechanism 20 relative to the annular wall 12. The third sealing assembly 28 includes a third sealing member 281 and third clamping members 282 disposed on two sides of the third sealing member 281. Two third clamping members 282 are disposed on the body 25 and clamp the third sealing member 281. The third sealing member 281 can be made of an elastomer material, and can be fitted to the annular wall 12 to ensure slidable sealing between the third sealing member 281 and the annular wall 12. Furthermore, the third sealing member 281 made of the elastomer material can reduce wear when it slides relative to the annular wall 12, thereby reducing the risk of sealing failure caused by wear.

In an embodiment of the present application, a portion of the first groove wall 21 is located on the first sealing member 261, and the other portion of the first groove wall is located on one of the two first clamping members 262 closer to the second groove 300.

A portion of the second groove wall 22 is located on the third sealing member 281 and the other portion of the second groove wall 22 is located on one of the two third clamping members 282 closer to the first groove 300. The third clamping members 282 may be made of a hard material. The third clamping members 282 may be integrally formed with the body 25. Additionally, in some exemplary embodiments, the third clamping members 282 may also be detachably connected to the body 25 to facilitate replacement of the type of the third sealing assembly 28. The third clamping members 282 can also be moved relative to the body 25 to adjust a position of the third sealing assembly 28 relative to the body 25. After the position is adjusted, positions of the third clamping members 282 can be fixed to fix the position of the third sealing assembly 28.

In an exemplary embodiment, referring to FIGS. 3, 8 to 12, the housing assembly 10 is provided with a through hole 600 corresponding to each moving mechanism 20, and the body 25 has a first end 251 that passes through the corresponding through hole 600 and protrudes from the housing assembly 10 so as to be driven by the driving member 30. The first end 251 is one of two ends of the body 25, and the flow of water to the two ends of the body 25 can be prevented by the slidable sealing between the second sealing assembly 27 and the circumferential wall 11 and the slidable sealing between the third sealing assembly 28 and the annular wall 12, so that arrangement of the through hole 600 does not affect the sealing performance of the water outlet device on water. The through hole 600 is disposed to facilitate the first end 251 to be mated with the driving member 30, and to guide the first end 251 to ensure a mating accuracy between the first end 251 and the driving member 30. The driving member 30 is capable of pressing the first end 251 into the through hole 600 to drive the corresponding moving mechanism 20 to move relative to the housing assembly 10 along the first direction.

In an exemplary embodiment, referring to FIG. 1 to FIG. 3 and FIG. 7 to FIG. 12, the driving member 30 is a push button and is slidably connected with the housing assembly 10. A side of the driving member 30 facing the first end 251 is provided with a protruding part 31, and the first end 251 is slidable relative to the protruding part 31 to drive the corresponding moving mechanism 20 to move relative to the housing assembly 10 along the first direction. Arrangement of the protruding part 31 can change an undulation degree of the side of the driving member 30 facing the first end 251. During a sliding process of the first end 251 relative to the protruding part 31, the first end 251 can be pressed into the through hole 600 by the protruding part 31, thereby driving the corresponding moving mechanism 20 to move relative to the housing assembly 10 along the first direction.

In an embodiment of the present application, four moving mechanisms 20 are provided, and the protruding part 31 can contact with each first end 251 and slide relative to the first end 251 during sliding along the housing assembly 10, so as to drive the corresponding moving mechanism 20 to move relative to the housing assembly 10 along the first direction. A plurality of moving mechanisms 20 are driven by one driving member 30, thus saving the number of parts of the water outlet device.

One of the housing assembly 10 and the driving member 30 has a chute 700 and the other has a slider 32 that is in slidable matching with the chute 700. In an embodiment of the present application, the chute 700 is disposed on the housing assembly 10, and the slider 32 is disposed on the driving member 30. In addition, in order to facilitate driving of the driving member 30, a driving protrusion 33 is provided on the driving member 30 to increase a contact area between a finger and the driving member 30.

In an exemplary embodiment, referring to FIGS. 3 and 8-12, the housing assembly 10 is provided with a reset member 40 corresponding to each moving mechanism 20, and the reset member 40 is configured to be able to generate a reset driving force for the corresponding moving mechanism 20 to drive the moving mechanism 20 to be reset, so as to facilitate the protruding part 31 driving the moving mechanism 20 again. The reset member 40 may be a spring. In a process of driving the moving mechanism 20 by the driving member 30, the reset member 40 can be compressed to generate a reset driving force, and the reset driving force can drive the moving mechanism 20 so that the first end 251 abuts against the protruding part 31 to ensure a matching accuracy between the protruding part 31 and the first end 251. In addition, in some embodiments, the reset member 40 may also be a magnetic member, which can generate magnetic attraction to the moving mechanism 20 to generate a reset driving force for the corresponding moving mechanism 20.

In an exemplary embodiment, referring to FIG. 7, FIG. 11 and FIG. 12, guiding surfaces 311 are provided on two sides of the protruding part 31 in a moving direction of the driving member 30. Thus, when the driving member 30 reciprocates with respect to the housing assembly 10, the first end 251 can slide up or down from the protruding part 31 through the guiding surfaces 311, thereby ensuring ease of driving the moving mechanism 20 by the driving member 30. In addition, the first end 251 may also have a passivation surface to reduce wear caused by sliding with respect to the protruding part 31.

In an exemplary embodiment, referring to FIGS. 8-12, the reset member 40 is a coil spring, the body 25 has a second end 252 disposed opposite to the first end 251, and the reset member 40 is disposed between the second end 252 and the housing assembly 10. The second end 252 is one of the two ends of the body 25, and flowing of water to the two ends of the body 25 is prevented by the slidable sealing between the second sealing assembly 27 and the circumferential wall 11 and the slidable sealing between the third sealing assembly 28 and the annular wall 12, so that the water does not affect the reset member 40 disposed between the second end 252 and the housing assembly 10, ensuring that the reset member 40 works in a non-humid environment and ensuring its working stability. In an embodiment of the present application, the second sealing assembly 27 is disposed on the body 25 and close to the first end 251. The third sealing assembly 28 is disposed on the body 25 and close to the second end 252.

In an exemplary embodiment, referring to FIGS. 8 to 12, the second end 252 is provided with an accommodating groove 800, the housing assembly 10 is provided with a connecting column 13 opposite to the accommodating groove 800, and the reset member 40 is sleeved on the connecting column 13 and partially accommodated in the accommodating groove 800. Position stability of the reset member 40 can be improved and a direction accuracy of the reset driving force generated by the reset member 40 can be ensured by arrangement of the accommodating groove 800 and the connecting column 13.

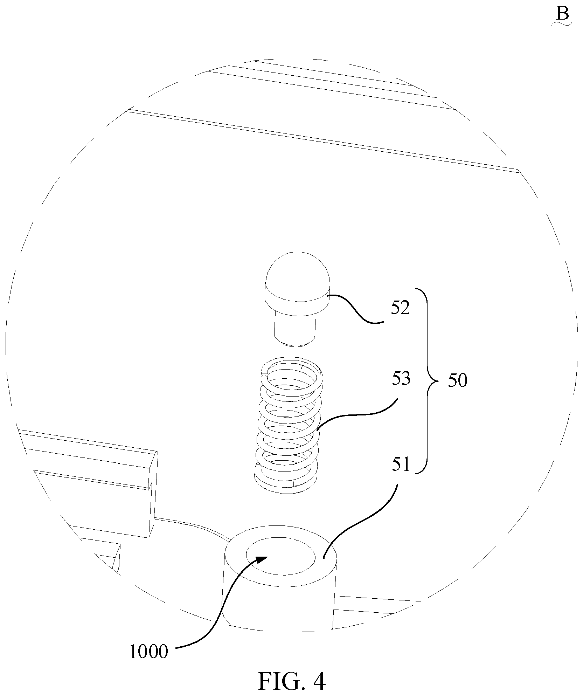

In an exemplary embodiment, referring to FIG. 4, FIG. 7, FIG. 11 and FIG. 12, the water outlet device further includes a positioning assembly 50, the positioning assembly 50 is disposed on one of the housing assembly 10 and the driving member 30, and a positioning member is disposed on the other of the housing assembly 10 and the driving member 30. A plurality of positioning parts 900 are provided on the positioning member and the plurality of positioning parts 900 are disposed to cooperate with the positioning assembly 50 for positioning in different communication or disconnection states between the water inlet flow channel 100 and each water outlet hole 200, so as to be able to sense whether the driving member 30 moves to a preset position, realize the sensing of different communication or disconnection states between the water inlet flow channel 100 and each water outlet hole 200 corresponding to each preset position, and further realize the sensing of whether the water outlet is switched in place. In an embodiment of the present application, the positioning part 900 has a groove structure.

In an exemplary embodiment, referring to FIGS. 4, 7, 11 and 12, the positioning assembly 50 includes a mounting component 51, an abutting component 52 and an elastic component 53. The mounting component 51 is disposed on one of the housing assembly 10 and the driving member 30, the mounting component 51 is provided with a mounting space 1000. The abutting component 52 is partially located in the mounting space 1000, and the elastic component 53 is mounted in the mounting space 1000 and capable of abutting the abutting component 52 against the positioning member. In this way, arrangement of the elastic component 53 enables the abutting component 52 and the positioning member to be more closely matched with each other, thereby avoiding abnormal noise when the abutting component 52 slides relative to the positioning member due to a gap between the abutting component 52 and the positioning member.

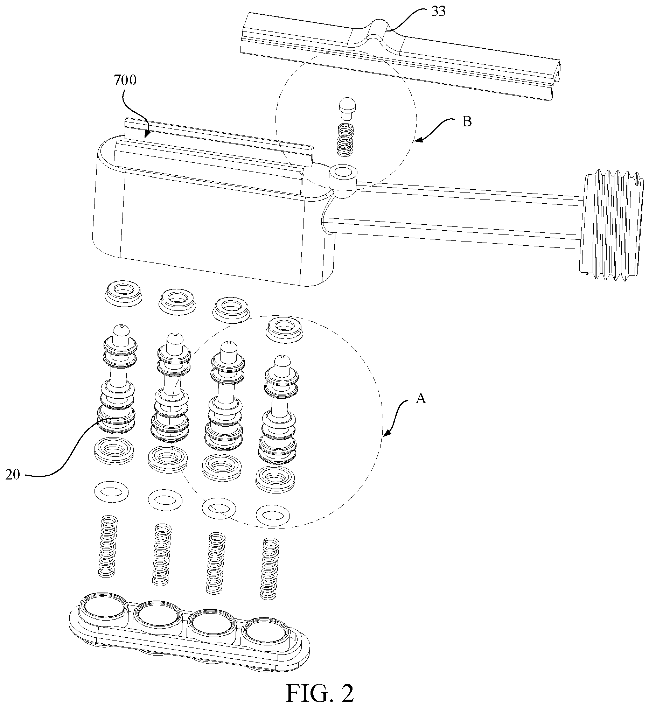

In an exemplary embodiment, referring to FIG. 2, FIG. 3, FIG. 10 and FIG. 12, a plurality of water outlet holes 200 are provided, the number of moving mechanisms 20 is the same as the number of the water outlet holes 200, and the moving mechanisms 20 are in one-to-one correspondence with the water outlet holes 200. The driving member 30 can move relative to the housing assembly 10 to drive at least one of the moving mechanisms 20 to move relative to the housing assembly 10 along the first direction, so as to communicate or disconnect the water outlet hole 200 corresponding to the at least one moving mechanism 20 with/from the water inlet flow channel 100. In an embodiment of the present application, the number of the moving mechanisms 20 is four and they are arranged in sequence along the moving direction of the driving member 30, and a size of the protruding part 31 along the moving direction of the driving member 30 can drive at most two moving mechanisms 20 to move relative to the housing assembly 10 along the first direction, so that the water outlet holes 200 corresponding to the moving mechanisms 20 communicate with the water inlet flow channel 100 and discharge water. In an embodiment of the present application, the size of the protruding part 31 along the moving direction of the driving member 30 is designed such that when the two moving mechanisms 20 contact with the protruding part 31 at the same time, the corresponding two first ends 251 are respectively located on the two guiding surfaces 311, so that the two moving mechanisms 20 do not slide onto the protruding part 31 completely, resulting in that the two moving mechanisms 20 do not move to the positions where the corresponding water outlet chambers 400 are completely open, and the water outlet chambers 400 are partially opened so that the water outlet pressure can be guaranteed when discharging through a plurality of water outlet holes 200, thus avoiding excessive attenuation of the water outlet pressure when discharging through the plurality of water outlet holes 200 and affecting the use experience.

In an exemplary embodiment, referring to FIGS. 2, 5, 8 to 12, the housing assembly 10 includes a first outer housing 14 and a second outer housing 15, and the moving mechanism 20 is mounted in a space formed by the first outer housing 14 and the second outer housing 15. In an embodiment of the present application, the first outer housing 14 and the second outer housing 15 can be detachably connected to facilitate disassembly, assembly and maintenance of the moving mechanism 20 and cleaning of the interior of the water outlet device. The water inlet flow channel 100, the water outlet hole 200, the circumferential wall 11, the chute 700 and the positioning assembly 50 are disposed on the first outer housing 14. The annular wall 12 and the connecting column 13 are disposed on the second outer housing 15.

In the description of the present application, it should be noted that the orientation or position relationships indicated by the terms "upper", "lower", "one side", "the other side", "one end", "the other end", "side", "relative", "corners", "periphery" and "square structure" or the like are based on the orientation or position relationships shown in the drawings, which are only for convenience of describing the present application and simplifying the description, rather than indicating or implying that the structure referred has the specific orientation, or is constructed and operated in the specific orientation, and thus cannot be interpreted as a limitation on the present application.

In the description of the embodiments of the present application, unless otherwise explicitly specified and limited, the terms "connection", "direct connection", "indirect connection", "fixed connection", "mounting" and "assembly" should be understood in a broad sense. For those of ordinary skills in the art, the specific meanings of the aforementioned terms in the present application may be understood according to specific situation.

## Claims

1. A water outlet device, comprising:
a housing assembly (10) provided with a water inlet flow channel (100) and at least one water outlet hole (200);
a moving mechanism (20) movably mounted in the housing assembly (10) and movable relative to the housing assembly (10) along a first direction, wherein the moving mechanism (20) is provided between each water outlet hole (200) and the water inlet flow channel (100), the moving mechanism (20) is provided with a first groove (300), the first groove (300) is communicated with the water inlet flow channel (100), the moving mechanism (20) is provided with a first groove wall (21) and a second groove wall (22) opposite to each other along the first direction, the first groove wall (21) and the second groove wall (22) define the first groove (300), the first groove wall (21) and the second groove wall (22) are arranged so that water acting forces acting on the first groove wall (21) and the second groove wall (22) are able to be at least partially counteracted; and
a driving member (30) movably connected to the housing assembly (10), wherein the driving member (30) is movable relative to the housing assembly (10) so as to drive the moving mechanism (20) to move relative to the housing assembly (10) along the first direction, so that the water outlet hole (200) corresponding to the moving mechanism (20) is communicated with or disconnected from the water inlet flow channel (100).

2. The water outlet device according to claim 1, wherein the housing assembly (10) is further provided with at least one water outlet chamber (400), each water outlet hole (200) is in one-to-one correspondence with each water outlet chamber (400), and communicates with the water inlet flow channel (100) through the corresponding water outlet chamber (400), and each moving mechanism (20) is able to block and seal a side of the corresponding water outlet chamber (400) close to the water inlet flow channel (100), so as to disconnect the water outlet hole (200) corresponding to the moving mechanism (20) from the water inlet flow channel (100).

3. The water outlet device according to claim 2, wherein the moving mechanism (20) is partially accommodated in the corresponding water outlet chamber (400) and is provided with a second groove (500), the second groove (500) is disposed to be accommodated in the water outlet chamber (400) and communicated with the water outlet chamber (400) in a state where a side of the corresponding water outlet chamber (400) close to the water inlet flow channel (100) is blocked and sealed, the moving mechanism (20) is provided with a third groove wall (23) and a fourth groove wall (24) opposite to each other along the first direction corresponding to the second groove (500), the third groove wall (23) and the fourth groove wall (24) define the second groove (500), and the third groove wall (23) and the fourth groove wall (24) are disposed such that water acting forces applied to the third groove wall (23) and the fourth groove wall (24) respectively are able to be at least partially counteracted.

4. The water outlet device according to claim 3, wherein the housing assembly (10) is provided with a circumferential wall (11) respectively corresponding to each water outlet chamber (400) and defining the corresponding water outlet chamber (400), and the circumferential wall (11) has an opening (111) communicating with the water inlet flow channel (100);
each moving mechanism (20) is guided by and matched with the corresponding circumferential wall (11) and is slidable relative to the circumferential wall (11) along the first direction, and the fourth groove wall (24) is able to be fitted to the corresponding opening (111) to block and seal a side of the corresponding water outlet chamber (400) close to the water inlet flow channel (100).

5. The water outlet device according to claim 4, wherein the fourth groove wall (24) has a guiding part (241), and the guiding part (241) is configured to be able to guide water to the water outlet chamber (400); and/or
a space formed by the opening (111) has a large end side facing the fourth groove wall (24), and the fourth groove wall (24) is partially accommodated in the opening (111).

6. The water outlet device according to claim 4, wherein the moving mechanism (20) comprises a body (25) and a first sealing assembly (26), the first sealing assembly (26) is disposed on the body (25), and the fourth groove wall (24) is located on the first sealing assembly (26).

7. The water outlet device according to claim 6, wherein the moving mechanism (20) further comprises a second sealing assembly (27) disposed on the body (25) and spaced from the first sealing assembly (26), the third groove wall (23) is located on the second sealing assembly (27), and the second sealing assembly (27) is able to be slidably sealed with the circumferential wall (11).

8. The water outlet device according to claim 7, wherein the housing assembly (10) is provided with an annular wall (12) corresponding to each moving mechanism (20), each circumferential wall (11) is in one-to-one correspondence with one of the annular walls (12), and the circumferential wall (11) and the annular wall (12) are respectively located at two sides of the corresponding moving mechanism (20) along the first direction, the moving mechanism (20) further comprises a third sealing assembly (28) disposed on the body (25), the third sealing assembly (28) is located at a side of the first sealing assembly (26) away from the second sealing assembly (27) and is spaced from the first sealing assembly (26), the first groove wall (21) is disposed at a side of the first sealing assembly (26) facing away from the fourth groove wall (24), and the second groove wall (22) is disposed on the third sealing assembly (28), and the third sealing assembly (28) is able to be slidably sealed with the annular wall (12).

9. The water outlet device according to claim 8, wherein the housing assembly (10) is provided with a through hole (600) corresponding to each moving mechanism (20), and the body (25) has a first end (251) which passes through the corresponding through hole (600) and is protruded from the housing assembly (10) so as to be driven by the driving member (30).

10. The water outlet device according to claim 9, wherein the driving member (30) is a push button and is slidably connected with the housing assembly (10), a side of the driving member (30) facing the first end (251) is provided with a protruding part (31), and the first end (251) is slidable relative to the protruding part (31) to drive the corresponding moving mechanism (20) to move relative to the housing assembly (10) along the first direction; and/or
a reset member (40) is provided on the housing assembly (10) corresponding to each moving mechanism (20), and the reset member (40) is configured to be able to generate a reset driving force for the corresponding moving mechanism (20) to drive the moving mechanism (20) to reset.

11. The water outlet device according to claim 10, wherein guiding surfaces are provided at two sides of the protruding part (31) along a moving direction of the driving member (30); and/or
the reset member (40) is a coil spring, the body (25) has a second end (252) opposite to the first end, and the reset member (40) is disposed between the second end (252) and the housing assembly (10).

12. The water outlet device according to claim 11, wherein the second end (252) has an accommodating groove (800), the housing assembly (10) is provided with a connecting column (13) opposite to the accommodating groove (800), and the reset member (40) is sleeved on the connecting column (13) and partially accommodated in the accommodating groove (800).

13. The water outlet device according to claim 1, wherein the water outlet device further comprises a positioning assembly (50) disposed on one of the housing assembly (10) and the driving member (30), a positioning member is disposed on the other of the housing assembly (10) and the driving member (30), a plurality of positioning parts (900) are disposed on the positioning member, and the plurality of positioning parts (900) are disposed to cooperate with the positioning assembly (50) for positioning in different communication or disconnection states between the water inlet flow channel (100) and each of the water outlet holes (200) respectively; and/or
a plurality of water outlet holes (200) are provided, a quantity of the moving mechanisms (20) is consistent with a quantity of the water outlet holes (200), and the plurality of water outlet holes (200) and the moving mechanisms (20) are in one-to-one correspondence, and the driving member (30) is movable relative to the housing assembly (10) to drive at least one of the moving mechanisms (20) to move relative to the housing assembly (10) along the first direction, so as to cause the water outlet hole (200) corresponding to the moving mechanism (20) to be communicated with or disconnected from the water inlet flow channel (100).

14. The water outlet device according to claim 13, wherein the positioning assembly (50) comprises a mounting component (51), an abutting component (52) and an elastic component (53), the mounting component (51) is disposed on one of the housing assembly (10) and the driving member (30), the mounting component (51) is provided with a mounting space, the abutting component (52) is partially located in the mounting space, and the elastic component (53) is mounted in the mounting space and is able to abut the abutting component (52) against the positioning member.

15. A water outlet system, comprising:
the water outlet device according to any one of claims 1 to 14; and
a water supply device configured to capable of supplying water to the water inlet flow channel (100).
